(19)

Europäisches
Patentamt
European
Patent Office
Office européen
des brevets

(11) **EP 4 331 800 A1**

(12) **EUROPEAN PATENT APPLICATION**

(43) Date of publication:
**06.03.2024 Bulletin 2024/10**

(21) Application number: **22192848.4**

(22) Date of filing: **30.08.2022**

(51) International Patent Classification (IPC):
*B29B 17/00* (2006.01)   *C08J 3/20* (2006.01)
*C08J 5/00* (2006.01)   *C08J 11/04* (2006.01)
*C08K 5/00* (2006.01)   *C08K 5/1545* (2006.01)
*C08K 5/526* (2006.01)

(52) Cooperative Patent Classification (CPC):
(C-Sets available)
**C08K 5/005; C08K 5/1545; C08K 5/526**   (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Basell Poliolefine Italia S.r.l.
20121 Milano (IT)**

(72) Inventors:
• **Destro, Mara
  44122 Ferrara (IT)**
• **FIORAVANTI, Riccardo
  44122 Ferrara (IT)**

(74) Representative: **LyondellBasell
c/o Basell Poliolefine Italia
Intellectual Property
P.le Donegani 12
44122 Ferrara (IT)**

(54) **PROCESS FOR RECYCLING PROPYLENE BASED POLYMERS**

(57)   A process for preparing an article containing at least 30 wt% of a recycled polypropylene composition, based on the total weight of the article comprising:
a) providing a recycled polypropylene composition comprising an additive package and a propylene based polymer being a Post-Industrial Resin (PIR) or Post-Consumer Resin (PCR);
b) melting the recycled polypropylene composition a) and
c) recover the final article;
wherein the additive package comprises at least one antioxidant and vitamin E.

**EP 4 331 800 A1**

**(Cont. next page)**

(52) Cooperative Patent Classification (CPC): (Cont.)

C-Sets
**C08K 5/005, C08L 23/10;**
**C08K 5/1545, C08L 23/10;**
**C08K 5/526, C08L 23/14**

**Description**

FIELD OF THE INVENTION

The present disclosure relates to a process for preparing an article containing at least 30 wt% of a recycled polypropylene composition having a low value of Melt Flow Rate, determined according to the method ISO 1133-1 (230° C, 2.16 kg).

BACKGROUND OF THE INVENTION

It is well known in the art that in order to recycle a propylene based composition the latter has to be melted one or more time. The melting usually worse some of the properties of the polymer such as the Melt Flow Rate so that said recycled composition cannot be used for some application requiring low Melt Flow Rate values. The applicant found that it is possible to use an additive packages limiting the increasing of Melt Flow Rate after several melting cycles.

SUMMARY OF THE INVENTION

Thus an object of the present disclosure is a process for preparing an article containing at least 30 wt% of a recycled polypropylene composition, based on the total weight of the article comprising:

a) providing a recycled polypropylene composition comprising an additive package and a propylene based polymer being a Post-Industrial Resin (PIR) or Post-Consumer Resin (PCR);
b) melting the recycled polypropylene composition a) and
c) recover the final article;

wherein the additive package comprises at least one antioxidant and vitamin E.

DETAILED DESCRIPTION OF THE IN VENTION

Thus an object of the present disclosure is a process for preparing an article containing at least 30 wt% of a recycled polypropylene composition, based on the total weight of the article comprising:

a) providing a recycled polypropylene composition comprising an additive package and a propylene based polymer being a Post-Industrial Resin (PIR) or Post-Consumer Resin (PCR);
b) melting the recycled polypropylene composition a) and
c) recover the final article;

wherein the additive package comprises at least one antioxidant and vitamin E.
Preferably vitamin E is added in an amount from 0.002 wt% to 0.05 wt% ; more preferably from 0.005 wt% to 0.025 wt%; even more preferably from 0.007wt% to 0.02 wt%; the amount being calculated on the weight of the final composition. Vitamin E (dl-alpha-tocopherol) is a synthetic product and commercially available.
Preferably the article prepared by the process of the present disclosure contain at least 50 wt% ; more preferably at least 80 wt%, based on the total weight of the article of recycled polypropylene composition.
The propylene based polymer is a polymer containing preferably at least 50 wt%; more preferably at least 60 wt% ; even more preferably at least 70 wt% of derived units of propylene. The remaining comonomers can be ethylene; 1-butene; 1-hexene or 1-octene derived units; ethylene being preferred. Examples of propylene based polymer can be propylene homopolymer, propylene, ethylene heterophasic polymer, propylene ethylene 1-butene, propylene ethylene 1-hexene terpolymers and mixtures thereof.
Preferably the Melt Flow Rate of the recycled polypropylene composition, determined according to the method ISO 1133 (230° C, 2.16 kg), ranges from 0.5 g/10 min to 20.0 g/10 min; preferably from 2.0 g/10 min to 15.0 g/10 min, more preferably from 5.0 g/10 min to 13.0 g/10 min.
Post-Industrial Resin (PIR) is the waste generated from the manufacturing process that is reclaimed or used again in the same material.
Post-Consumer Resin (PCR) defined as a resin used by the consumer for its intended purpose, that has reached its end of use, and then tossed into a recycling bin is excluded.
Preferably in the process of the present invention Post-Industrial Resin (PIR) is used.
The additive package comprises vitamin E and at least one antioxidant. Antioxidants are chemical compounds preventing oxygen from reacting with other compounds that are susceptible to oxidation. Antioxidants act also as heat stabilizers, They can be added to improve the shelf life of the polymer or to improve its high-temperature stability.

Antioxidant can be classified as:

a) hindered phenolic;
b) thiosynergists;
c) metal deactivators;

examples of antioxidants can be:

tris(2,4-di-tert.-butylphenyl) phosphite (sold for example as Irgafos 168); 2-tert-butyl-6-methyl-4-[3-(2,4,8,10-tetratert-butylbenzo[d][1,3,2]benzodioxaphosphepin-6-yl)oxypropyl]phenol (sold AS Sumilizer GP);
Bis (2.4-di-t-butylphenyl) Pentaerythritol Diphosphite (sold as for example Ultranox 626). Preferable antioxidant are tris(2,4-di-tert.-butylphenyl) phosphite (sold for example as Irgafos 168) and 2-tert-butyl-6-methyl-4-[3-(2,4,8,10-tetratert-butylbenzo[d][1,3,2]benzodioxaphosphepin-6-yl)oxypropyl]phenol (sold AS Sumilizer GP).

Preferably the antioxidant is added in an amount from 0.05 wt% to 0.80 wt% ; more preferably from 0.10 wt% to 0.5 wt%; even more preferably from 0.15 wt% to 0.30 wt%; the amount being calculated on the weight of the final composition.

The article to be produced with the process of the present disclosure can be any article produced with the propylene based polymer such as film, sheet, pipe, injection molded object, blow molded object, roto molding object and thermoformed object.

The following examples are given to illustrate the present invention without limiting purpose.

EXAMPLE

**Characterization methods**

**Melting temperature and crystallization temperature:** Determined by differential scanning calorimetry (DSC)

. weighting 6 $\pm$1 mg, is heated to 220 $\pm$1° C at a rate of 20 °C/min and kept at 220 $\pm$1° C for 2 minutes in nitrogen stream and it is thereafter cooled at a rate of 20° C/min to 40 $\pm$2° C, thereby kept at this temperature for 2 min to crystallize the sample. Then, the sample is again fused at a temperature rise rate of 20° C/min up to 220° C $\pm$1. The melting scan is recorded, a thermogram is obtained, and, from this, melting temperatures and crystallization temperatures are read.

**Melt Flow Rate:** Determined according to the method ISO 1133-1 (230° C, 2.16 kg).

**Xylene-soluble fraction (XS) at 25°C**

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.)**

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

**Haze (on 1 mm plaque)**

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75x75x1 mm plaques are molded with a GBF Plastiniector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Ethylene content in the copolymers**

13C NMR spectra were acquired on a Bruker AV-600 spectrometer equipped with cryoprobe, operating at 160.91 MHz in the Fourier transform mode at 120 °C.

The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

$$PPP = 100 \ T\beta\beta/S \quad PPE = 100 \ T\beta\delta/S \quad EPE = 100 \ T\delta\delta/S$$
$$PEP = 100 \ S00/S \quad PEE = 100 \ S\beta\delta/S \quad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation: E% mol = 100 * [PEP+PEE+EEE]The weight percentage of ethylene content was evaluated using the following equation:

$$100 * E\% \ mol * MWE$$

$$E\% \ wt. = E\% \ mol * MWE + P\% \ mol * MWP$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$$

The tacticity of Propylene sequences was calculated as mm content from the ratio of the PPP mmTββ (28.90-29.65 ppm) and the whole Tββ (29.80-28.37 ppm).

Impact test: ISO 180

**Preparation of injection molded specimens:** test specimens 80 x 10 x 4 mm were obtained according to the method ISO 1873-2:2007.
**Preparation of injection molded specimens:** test specimens 80 x 10 x 4 mm were obtained according to the method ISO 1873-2:2007.
**Charpy Impact test at 23°C:** measured according to ISO 179-1:2010 on injection molded specimens.

**Propylene based polymer**

A commercial propylene ethylene random copolymer sold by lyondellbasell has been used as propylene based polymer. The random copolymer has the features reported on table 1

Table 1

| | | |
|---|---|---|
| Ethylene content | wt% | 3.3 |
| MFR | g/10' | 40 |
| Xylene soluble at 25°C | wt% | 6 |
| Melting temperature | °C | 149 |
| Tensile Modulus | MPa | 1100 |
| Charpy impact strength 23°C | $Kj/m^2$ | 5 |
| Charpy impact strength 23°C | $Kj/m^2$ | 2.5 |

**Examples 1-2 and comparative examples 3-4**

The random copolymer has been blended with the additives of table 2. Percentage by weight are based on the total composition.

Table 2

| | Vitamin E wt% | Irgafos 168 wt% | Sumilizer GP wt% |
|---|---|---|---|
| Ex 1 | 0.01 | 0.25 | 0 |
| Ex 2 | 0.01 | 0.20 | 0 |
| Ex 3 | 0.01 | 0.10 | 0 |
| comp Ex 4 | 0 | 0.25 | 0 |
| comp Ex 5 | 0 | 0.20 | 0 |
| Ex 6 | 0.01 | 0 | 0.05 |
| Ex 7 | 0.01 | 0.04 | 0.05 |
| comp Ex 8 | 0 | 0 | 0.05 |
| comp Ex 9 | 0 | 0.04 | 0.05 |

Irgafos 168 is the commercial name of tris(2,4-di-tert.-butylphenyl) phosphite; Sumilizer GP is the commercial name of 2-tert-butyl-6-methyl-4-[3-(2,4,8,10-tetratert-butylbenzo[d][1,3,2]benzodioxaphosphepin-6-yl)oxypropyl]phenol.
The composition of Examples 1-9 have been extruded 4 times at 230°C to simulate the recycling process. MFR (ISO 1133-1 230° C, 2.16 kg) has been measured in each step as reported in table 3

Table 3

| g/10 min | MFR first melt | MFR second melt | MFR third melt | MFR fourth melt | delta MFR | |
|---|---|---|---|---|---|---|
| Ex 1 | 8.7 | 9.0 | 9.2 | 9.3 | 0.6 | |
| Ex 2 | 8.7 | 9.0 | 9.0 | 9.2 | 0.5 | |

(continued)

| g/10 min | MFR first melt | MFR second melt | MFR third melt | MFR fourth melt | delta MFR | |
|---|---|---|---|---|---|---|
| Ex 3 | 8.7 | 9.1 | 9.2 | 9.4 | 0.7 | |
| comp Ex 4 | 8.7 | 9.8 | 10.7 | 11.5 | 2.8 | |
| comp Ex 5 | 8.7 | 10.0 | 11.1 | 12.4 | 3.7 | |
| Ex 6 | 8.7 | 9.3 | 9.4 | 9.6 | 0.9 | |
| Ex 7 | 8.7 | 9.0 | 9.2 | 9.5 | 0.8 | |
| comp Ex 8 | 8.7 | 10.4 | 11.2 | 14 | 5.3 | |
| comp Ex 9 | 8.7 | 9.8 | 10.7 | 11.8 | 3.1 | |

From table 3 clearly results that MFR of the composition according to the invention is retained.

**Claims**

1. A process for preparing an article containing at least 30 wt% of a recycled polypropylene composition, based on the total weight of the article comprising:

   a) providing a recycled polypropylene composition comprising an additive package and a propylene based polymer being a Post-Industrial Resin (PIR) or Post-Consumer Resin (PCR);
   b) melting the recycled polypropylene composition a) and
   c) recover the final article;

   wherein the additive package comprises at least one antioxidant and vitamin E.

2. The process according to claim 1 wherein vitamin E is added in an amount from 0.002 wt% to 0.05 wt% the amount being calculated on the weight of the final composition.

3. The process according to any of claims 1-2 wherein vitamin E is added in an amount from 0.005 wt% to 0.025 wt% the amount being calculated on the weight of the final composition.

4. The process according to any of claims 1-3 wherein vitamin E is added in an amount from 0.007wt% to 0.02 wt% the amount being calculated on the weight of the final composition.

5. The process according to any of claims 1-5 wherein the propylene based polymer is a polymer containing e contain at least 50 wt% , based on the total weight of the article of recycled polypropylene composition.

6. The process according to any of claims 1-6 wherein the propylene based polymer is a polymer containing e contain at least 70 wt% , based on the total weight of the article of recycled polypropylene composition.

7. The process according to any of claims 1-6 wherein the propylene based polymer is a polymer containing at least 50 wt%; of derived units of propylene.

8. The process according to any of claims 1-7 wherein the propylene based polymer is a polymer containing at least 60 wt%; of derived units of propylene.

9. The process according to any of claims 1-8 wherein the propylene based polymer is a polymer containing at least 70 wt%; of derived units of propylene.

10. The process according to any of claims 1-9 wherein the propylene based polymer is a polymer containing one or more comonomers selected from the group consisting of ethylene; 1-butene; 1-hexene and 1-octene derived units other than derived units of propylene.

11. The process according to any of claims 1-10 wherein the antioxidant is selected from the group consisting of tris(2,4-di-tert.-butylphenyl) phosphite, 2-tert-butyl-6-methyl-4-[3-(2,4,8,10-tetratert-butylbenzo[d][1,3,2]benzodioxaphosphepin-6-yl)oxypropyl]phenolthe and their mixture.

12. The process according to any of claims 1-11 wherein the antioxidant is added in an amount from 0.05 wt% to 0.80 wt% the amount being calculated on the weight of the final composition.

13. The process according to any of claims 1-11 wherein the antioxidant is added in an amount from0.10 wt% to 0.5 wt% the amount being calculated on the weight of the final composition.

14. The process according to any of claims 1-13 wherein the article is selected form the group consisting of: film, sheet, pipe, injection molded object, blow molded object, roto molding object and thermoformed object.

15. The process according to any of claims 1-14 wherein the Melt Flow Rate of the recycled polypropylene composition, determined according to the method ISO 1133 (230° C, 2.16 kg), ranges from 0.5 g/10 min to 20 g/10 min.

Europäisches
Patentamt

European
Patent Office

Office européen
des brevets

# EUROPEAN SEARCH REPORT

Application Number

EP 22 19 2848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/317886 A1 (PFAENDNER RUDOLF [DE] ET AL) 8 October 2020 (2020-10-08) * paragraphs [0015], [0058], [0218], [0239] – [0254] * * examples; tables 2-8 * | 1-15 | INV. B29B17/00 C08J3/20 C08J5/00 C08J11/04 C08K5/00 C08K5/1545 C08K5/526 |
| Y | AL-MALAIKA S: "LEARNING FROM MOTHER NATURE: EXPLOITING A BIOLOGICAL ANTIOXIDANT FOR THE MELT STABILIZATION OF POLYMERS", MACROMOLECULAR SYMPOSIA, WILEY VCH VERLAG WEINHEIM, DE, no. 176, 1 November 2001 (2001-11-01), pages 107-117, XP001117111, ISSN: 1022-1360, DOI: 10.1002/1521-3900(200112)176:1<107::AID-MASY107>3.0.CO;2-1 * page 108, last paragraph * * figures 1,5 * * page 113, paragraph 2 * | 1-15 | |
| A | US 9 718 949 B2 (BECTON DICKINSON CO [US]) 1 August 2017 (2017-08-01) * column 6, lines 42-51 * * claims * | 1-15 | TECHNICAL FIELDS SEARCHED (IPC) C08J C09J B29B C08K |
| A | JP 2008 222817 A (FURUKAWA ELECTRIC CO LTD) 25 September 2008 (2008-09-25) * examples * | 1-15 | |

The present search report has been drawn up for all claims

| Place of search | Date of completion of the search | Examiner |
|---|---|---|
| Munich | 13 February 2023 | Behm, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2848

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | | Publication date |
|---|---|---|---|---|---|
| US 2020317886 | A1 | 08-10-2020 | BR 112020006015 | A2 | 06-10-2020 |
| | | | CN 111448250 | A | 24-07-2020 |
| | | | DE 102017217312 | A1 | 28-03-2019 |
| | | | EP 3688081 | A1 | 05-08-2020 |
| | | | JP 2020535286 | A | 03-12-2020 |
| | | | KR 20200091381 | A | 30-07-2020 |
| | | | US 2020317886 | A1 | 08-10-2020 |
| | | | WO 2019063550 | A1 | 04-04-2019 |
| US 9718949 | B2 | 01-08-2017 | AU 2011291997 | A1 | 14-03-2013 |
| | | | AU 2016201295 | A1 | 17-03-2016 |
| | | | AU 2017201846 | A1 | 06-04-2017 |
| | | | AU 2018203590 | A1 | 14-06-2018 |
| | | | BR 112013003969 | A2 | 12-07-2016 |
| | | | CA 2808896 | A1 | 23-02-2012 |
| | | | CN 103118714 | A | 22-05-2013 |
| | | | CN 105031743 | A | 11-11-2015 |
| | | | EP 2605806 | A1 | 26-06-2013 |
| | | | EP 3323442 | A1 | 23-05-2018 |
| | | | ES 2666734 | T3 | 07-05-2018 |
| | | | JP 6821849 | B2 | 27-01-2021 |
| | | | JP 7023069 | B2 | 21-02-2022 |
| | | | JP 2013538894 | A | 17-10-2013 |
| | | | JP 2016064668 | A | 28-04-2016 |
| | | | JP 2017203174 | A | 16-11-2017 |
| | | | JP 2020139167 | A | 03-09-2020 |
| | | | JP 2021050361 | A | 01-04-2021 |
| | | | MX 369607 | B | 13-11-2019 |
| | | | US 2012046411 | A1 | 23-02-2012 |
| | | | US 2015218354 | A1 | 06-08-2015 |
| | | | US 2017283601 | A1 | 05-10-2017 |
| | | | WO 2012024413 | A1 | 23-02-2012 |
| JP 2008222817 | A | 25-09-2008 | NONE | | |

EPO FORM P0459

For more details about this annex : see Official Journal of the European Patent Office, No. 12/82